# EUROPEAN PATENT SPECIFICATION

(11) **EP 3 455 125 B1**
(45) Date of publication and mention of the grant of the patent: **15.05.2024**
(21) Application number: 17728915.4
(22) Date of filing: 09.05.2017
(51) Int. Cl.: B63B 27/34

(54) **METHOD OF ARRANGING A VESSEL ASSEMBLY COMPRISING FIRST AND SECOND VESSELS INTERCONNECTED VIA A FLEXIBLE CONDUIT**
VERFAHREN ZUR ANORDNUNG EINER GEFÄSSANORDNUNG MIT DURCH EINE FLEXIBLE LEITUNG MITEINANDER VERBUNDENEN ERSTEN UND ZWEITEN GEFÄSSEN
PROCÉDÉ D'AGENCEMENT D'UN ENSEMBLE DE RÉCIPIENTS COMPRENANT UN PREMIER ET UN SECOND RÉCIPIENT INTERCONNECTÉS PAR L'INTERMÉDIAIRE D'UN CONDUIT FLEXIBLE

(30) Priority: 11.05.2016 GB 201608249
(43) Date of publication of application: 20.03.2019
(73) Proprietor: Trelleborg Westbury Limited, Tewkesbury GL20 8UQ (GB)
(72) Inventor: DALY, Samuel, Radstock Somerset BA3 3FS (GB); THOMAS, Richard, Bath BA2 1DX (GB)
(74) Representative: Potter Clarkson
(86) International application number: PCT/GB2017/051278
(87) International publication number: WO 2017/194922

(56) References cited:
- EP-A1- 2 433 901
- WO-A1-2007/113201
- WO-A1-2013/064601
- WO-A1-2015/166287
- US-A- 4 408 943
- US-A1- 2009 293 969
- US-B1- 8 375 878
- US-B1- 8 490 566

## Description

This invention relates to a method of arranging a vessel assembly comprising first and second vessels interconnected via a flexible conduit for transferring matter between the first and second vessels.

It is known to use a pipe or hose to transfer matter, such as oil, liquefied natural gas, or other fluids, between two ships.

US 8,375,878 B1 discloses a method for positioning a transport ship or vessel relative to a fixed or floating vessel.

According to an aspect of the invention, there is provided a method of arranging a vessel assembly comprising first and second vessels interconnected via a flexible conduit for transferring matter between the first and second vessels, a first end of the conduit in fluid communication with a first manifold of the first vessel, a second end of the conduit in fluid communication with a second manifold of the second vessel, the method comprising the steps of:
for each of a plurality of combinations of drafts of the vessels, calculating a respective manifold height difference between the respective heights of the first and second manifolds above a waterline;
calculating a plurality of maximum operating distance between the vessels, wherein each of the plurality of calculated maximum operating distances respectively corresponds to a respective one of the plurality of calculated manifold height differences, wherein each calculated maximum operating distance between the vessels corresponds to the maximum distance to which the vessels can drift apart before the conduit becomes taut at the respective manifold height difference; and
arranging the vessels within a working envelope that corresponds to the plurality of calculated maximum operating distances between the vessels.

The flexible conduit (e.g. a flexible pipe, hose and the like) interconnecting the vessels (e.g. ships, boats, and the like) may become taut when the vessels drift too far apart. This in turn may lead to damage to the conduit and/or damage to equipment connected to the conduit, thus causing spillage/loss of the matter from the conduit.

For the purposes of this specification, the working envelope is defined as a region in which the vessels can drift apart without the conduit becoming taut. The arrangement of the vessels within the working envelope beneficially removes the risk of adverse effects resulting from the vessels drifting apart that leads to an unsafe operation of the conduit to transfer matter between the vessels. Examples of such adverse effects includes increased operational costs and detrimental environmental impact due to spillage/loss of the matter from the conduit.

Conventionally the working envelope of the first and second vessels is determined by the maximum horizontal distance between the first and second vessels before the conduit becomes taut.

The inventors have found that arranging the vessels within the conventional working envelope results in a sub-optimal operation of the conduit to transfer matter between the vessels. This is because the transfer of matter from one vessel to another results in respective changes in the drafts of the vessels, i.e. the depth of the parts of the vessels submerged below the waterline. In other words, the draft of each vessel varies with the transfer of matter between the vessels, which leads to a change in height of each manifold above the waterline. Such changes may shorten the actual maximum distance to which the vessels can drift apart before the conduit becomes taut, and thereby may unexpectedly cause the conduit to become taut within the conventional working example, thus leading to an unsafe operation of the conduit to transfer matter between the vessels.

The method of the invention enables the determination of a more optimal working envelope which takes into account the changes in drafts of the vessels resulting from the transfer of matter between the vessels, by considering the maximum distance to which the vessels can drift apart before the conduit becomes taut at each manifold height difference corresponding to a different combination of drafts of the vessels. This in turn reduces the risk of unexpected occurrence of the conduit becoming taut, thus improving the safety and reliability of the operation of the conduit to transfer matter between the vessels.

It will be appreciated that, when either end or both ends of the flexible conduit is connected to a plurality of manifolds on one ship, the determination of the working envelope may take into account the plurality of manifold height differences with reference to the plurality of manifolds.

In embodiments of the invention, the working envelope may correspond to the lower or lowest of the calculated maximum operating distances. The use of such a working envelope provides a straightforward way of improving the reliability of the operation of the conduit to transfer matter between the vessels.

In further embodiments of the invention, the plurality of combinations of drafts of the vessels may include:
- a first combination of drafts consisting of a minimum draft of the first vessel and a maximum draft of the second vessel;
- a second combination of drafts consisting of a maximum draft of the first vessel and a minimum draft of the second vessel;
- a third combination of drafts consisting of a minimum draft of the first vessel and a minimum draft of the second vessel; and/or
- a fourth combination of drafts consisting of a maximum draft of the first vessel and a maximum draft of the second vessel.

The inclusion of one or more of the first to fourth combination of drafts in the method of the invention permits further optimisation of the working envelope of the vessel assembly. This is because these combinations of drafts correspond to the maximum and minimum distances to which the vessels can drift apart before the conduit becomes taut at any manifold height difference.

The maximum draft of each vessel may correspond to the vessel being in a loaded state, and a minimum draft of each vessel may correspond to the vessel being in a ballast state.

The plurality of combinations of drafts may include a fifth combination of drafts for which the manifold height difference is equal to zero. Preferably, in the fifth combination of drafts, a maximum draft of one of the first and second vessels is higher than the maximum draft of the other of the first and second vessels, and the minimum draft of the one of the first and second vessels is lower than the minimum draft of the other of the first and second vessels.

The consideration of the fifth combination of drafts allows the calculation of a maximum operating distance at the zero manifold height difference, which in turn permits further optimisation of the working envelope.

Each calculated maximum operating distance between the vessels may be a function of one or more variables that relate to, for example, the shape and configuration of the vessels, the shape and configuration of the flexible conduit, and one or more components connected in fluid communication with the conduit and in fluid communication between the manifolds.

For example, each calculated maximum operating distance between the vessels may be a function of one or more of:
- a length of the flexible conduit;
- the respective manifold height difference;
- a depth of the first manifold from the side of the first vessel;
- a depth of the second manifold from the side of the second vessel;
- a length of at least one component connected in fluid communication with the conduit and in fluid communication between the manifolds;
- a list angle of the first vessel;
- a list angle of the second vessel.

When the vessel assembly includes a safety system, the method may include the step of selectively activating at least one safety function of the safety system to bring the vessel assembly to a safe state, wherein the selective activation of the or each safety function is carried out when the vessels are within the working envelope.

The working envelope optimised using the method of the invention can be used to define the activation point of the or each safety function in order to ensure that the or each safety function takes place while the vessels are still within the confines of the working envelope. This in turn ensures the activation of the or each safety function before the conduit becomes taut, thus improving the reliability of the safety system.

The safety system and the selective activation of the at least one safety function is applicable to a range of safety functions for bringing the vessel assembly to a safe state to ensure the safe operation of the conduit to transfer matter between the vessels. Such safety functions may be associated with, for example, prevention of damage to the conduit and attached equipment, prevention of spillage of matter from the conduit, and so on.

For example, when the vessel assembly further includes: an emergency release coupling, the emergency release coupling including first and second coupling portions, the first and second coupling portions connected in fluid communication with the conduit and in fluid communication between the manifolds, the first and second coupling portions configured to be selectively connectable and separable to permit selective coupling and separation of the first and second manifolds, the at least one safety function may include: a first safety function including initiation of a first safe state to perform an emergency shut-down of an operation to transfer matter between the vessels via the flexible conduit; and/or a second safety function including initiation of a second safe state to cause separation of the first and second coupling portions. Preferably the first and second coupling portions are configured to block the flow of matter therethrough when they are separated from each other.

Defining the activation of the first safety function and/or the second safety function with reference to the optimised working envelope enables the safety system to reliably perform the or each safety function associated with the emergency release coupling. This in turn removes the risk of adverse effects resulting from the vessels drifting apart that leads to an unsafe operation of the conduit to transfer matter between the vessels.

The selective activation of the first safety function may be carried out at a first drift distance between the vessels, and the selective activation of the second safety function may be carried out at a second drift distance between the vessels, the second drift distance being longer than the first drift distance.

The first safe state may include one or more of:
- shut-down of at least one pump configured to pump matter through the flexible conduit;
- closure of at least one valve configured to control the flow of matter through the flexible conduit, wherein the or each valve is located on either vessel;
- de-energisation of the emergency release coupling and keep the first and second coupling portions connected to each other;
- de-energisation of a power source configured to enable charging of a stored energy source (such as an accumulator) for an actuator (such as a hydraulic actuator, a pneumatic actuator, or a combination thereof) operable to initiate the separation of the first and second coupling portions;
- de-energisation of a heating system (such as an oil circulation system) arranged to control the temperature of the emergency release coupling;
- de-energisation of one or more solenoid valves switchable to control the operation of the emergency release coupling;
- maintaining a stored energy source (such as an accumulator) in a fully charged state, wherein the stored energy source is for an actuator (such as a hydraulic actuator, a pneumatic actuator, or a combination thereof) operable to initiate the separation of the first and second coupling portions;
- maintaining closed an activation element (such as an activation valve), which is switchable to open to initiate the separation of the first and second coupling portions;
- maintaining open a blocking element (such as a blocking valve), which is switchable to close to configure the first and second coupling portions to block the flow of matter therethrough;
- initiation of a timer so as to automatically trigger the activation of the second safety function following expiry of the timer.

There is provided a vessel assembly comprising first and second vessels interconnected via a flexible conduit for transferring matter between the first and second vessels, a first end of the conduit in fluid communication with a first manifold of the first vessel, a second end of the conduit in fluid communication with a second manifold of the second vessel, wherein the vessels are arranged within a working envelope that corresponds to a plurality of maximum operating distances between the vessels, each maximum operating distance between the vessels corresponds to the maximum distance to which the vessels can drift apart before the conduit becomes taut at a respective one of a plurality of manifold height differences, and each manifold height difference is determined by the difference between the respective heights of the first and second manifolds above a waterline for a respective one of a plurality of combination of drafts of the vessels.

It will be appreciated that the use of the terms "first" and "second" and the like in the patent specification is merely intended to help distinguish between similar features (e.g. the first and second vessels; the first and second manifolds), and is not intended to indicate the relative importance of one feature over another feature, unless specified as such.

A preferred embodiment of the invention will now be described, by way of a non-limiting example, with reference to the accompanying drawings in which:
Figure 1 shows schematically a vessel assembly;
Figure 2 shows schematically a representation of the loaded and ballast states of the vessels of the vessel assembly of Figure 1; and
Figure 3 illustrates the activation points of safety functions within a working envelope of the vessel assembly of Figure 1.

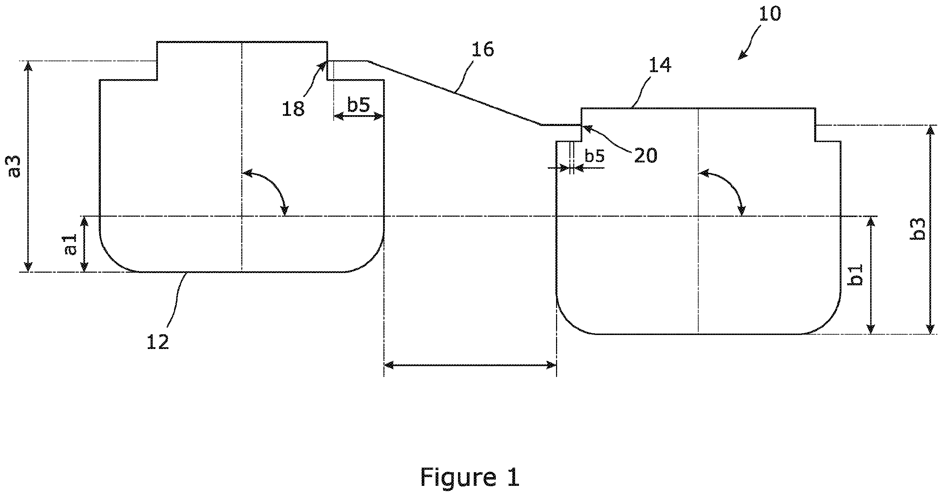

A vessel assembly is shown in Figure 1, and is designated generally by the reference numeral 10.

The vessel assembly 10 comprises first and second vessels that are arranged side-by-side on water. The vessels 12, 14 are interconnected via a flexible hose 16. More particularly, a first end of the hose 16 is connected to a presentation flange of a first manifold 18 of the first vessel such that the first end of the hose 16 is in fluid communication with the first manifold 18, and a second end of the hose 16 is connected to a presentation flange of a second manifold 20 of the second vessel such that the second end of the hose 16 is in fluid communication with the second manifold 20.

In use, the hose 16 is used to transfer matter, such as oil, liquefied natural gas or other fluids, from one vessel to another.

During the transfer of matter between the vessels 12, 14, it is important to ensure that the hose 16 does not become taut as a result of the vessels 12, 14 drifting too far apart, which in turn may lead to damage to the hose 16 and/or damage to equipment connected to the hose 16, thus causing spillage/loss of the matter from the hose 16. To prevent the vessels 12, 14 from drifting too far apart, the vessels 12, 14 are arranged within a working envelope, i.e. a region in which the vessels 12, 14 can drift apart without the hose 16 becoming taut. This may require active manoeuvring of either or both of the vessels 12, 14 to ensure that they stay within the confines of the working envelope.

In order to ascertain how far one vessel can drift from another before the hose 16 becomes taut, the manifold height difference between the heights of the first and second manifolds 18, 20 above a waterline is determined in order to find the angle of the hose 16. This is because the maximum distance to which the vessels 12, 14 can drift apart before the hose 16 becomes taut will vary with the angle of the hose 16.

As shown in Figure 1, the height of each manifold 18, 20 above the waterline is determined by deducting the corresponding draft a1, b1 (i.e. the depth of the part of the vessel 12, 14 submerged below the waterline) from the corresponding heights a3, b3 of the manifolds 18, 20 above the baseline of the vessel 12, 14. The maximum and minimum values of the drafts a1, b1 respectively correspond to loaded and ballast states of the respective vessels 12, 14, and thereby provides the maximum and minimum values of the heights of the manifolds 18, 20 above the waterline.

In addition the draft of each vessel 12, 14 varies with the transfer of matter between the vessels 12, 14, which leads to a change in height of each manifold 18, 20 above the waterline. This is because the transfer of matter from a vessel reduces the total weight of matter stored on board and thereby reduces the corresponding draft, while the transfer of matter to a vessel increases the total weight of matter stored on board and thereby increases the corresponding draft. Accordingly the height of each manifold 18, 20 above the waterline changes during the transfer of matter between the vessels 12, 14, thus resulting in changes in the manifold height difference.

Hence, the working envelope of the vessel assembly 10 must take into account such changes in the manifold height difference during the transfer of matter between the vessels 12, 14. This is done by considering the manifold height difference for each of a plurality of combination of drafts when determining the working envelope.

Preferably the plurality of combinations of drafts of the vessels 12, 14 includes
- a first combination of drafts consisting of a minimum draft A of the first vessel 12 and a maximum draft B of the second vessel 14;
- a second combination of drafts consisting of a maximum draft B of the first vessel 12 and a minimum draft A of the second vessel 14;
- a third combination of drafts consisting of a minimum draft A of the first vessel 12 and a minimum draft A of the second vessel 14; and/or
- a fourth combination of drafts consisting of a maximum draft B of the first vessel 12 and a maximum draft B of the second vessel 14.

The above combinations of drafts correspond to the maximum and minimum distances to which the vessels 12, 14 can drift apart before the hose 16 becomes taut at any manifold height difference.

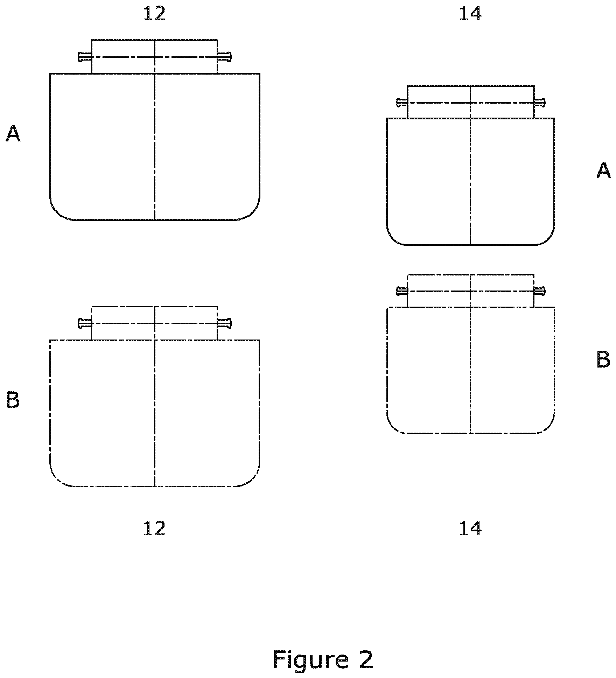

Figure 2 shows schematically a representation of the positions of the vessels 12, 14 corresponding to the first to fourth combination of drafts of the vessels 12, 14.

Optionally the plurality of combinations of drafts of the vessels 12, 14 may include a fifth combination of drafts. In the fifth combination of drafts, a maximum draft of one of the first and second vessels is higher than the maximum draft of the other of the first and second vessels, and the minimum draft of the one of the first and second vessels is lower than the minimum draft of the other of the first and second vessels. This means that, during the transfer of matter between the vessels 12, 14, the transition of each vessel 12, 14 between the loaded and ballast states will result in a point where both the first and second manifolds 18, 20 are level, i.e. the manifold height difference is equal to zero.

By determining the respective manifold height difference for each of the plurality of combinations of drafts of the vessels 12, 14, it becomes possible to determine the angle of the hose 16 for each combination of drafts of the vessels 12, 14. This in turn permits the determination of a respective maximum operating distance between the vessels 12, 14 at each manifold height difference, where each maximum operating distance between the vessels 12, 14 corresponds to the maximum distance to which the vessels 12, 14 can drift apart before the hose 16 becomes taut at the respective manifold height difference.

The plurality of maximum operating distances are used to design the boundaries of the working envelope in order to ensure that the hose 16 does not become taut at any manifold height difference when the vessels 12, 14 are within the confines of the working envelope.

Alternatively a straightforward way would be to design the working envelope to correspond to the lowest of the maximum operating distances.

Each maximum operating distance between the vessels 12, 14 may be further affected by a number of variables, which relate to the shape and configuration of the vessels 12, 14, the shape and configuration of the flexible hose 16, and one or more components connected in fluid communication with the hose 16 and in fluid communication between the manifolds 18, 20. Examples of these variables are described as follows.

Each maximum operating distance between the vessels 12, 14 is constrained by a length of the flexible hose 16. A longer hose 16 allows for more drift between the vessels 12, 14, and a shorter hose 16 allows for less drift between the vessels 12, 14.

The size of the fenders of the vessels 12, 14 represents the respective starting positions of both vessels. A larger fender reduces the distance from the starting position to the position at which the hose 16 becomes taut. Although a fender is compressible, the uncompressed size of the fender is used to evaluate its effect on each maximum operating distance between the vessels 12, 14 as a worst case scenario.

The depth b5 of a manifold 18, 20 from the side of the corresponding vessel 12, 14 is the distance of the presentation flange from the side of the vessel 12, 14. The deeper the depth b5 of the manifold 18, 20 from the side of the vessel 12, 14, the longer the length of the hose 16 that is required to extend from the manifold 18, 20 to the side of the vessel 12, 14. Therefore, for a fixed length of hose 16, the depth b5 of each manifold 18, 20 from the side of the corresponding vessel 12, 14 affects the maximum operating distance between the vessels 12, 14.

Each maximum operating distance is also affected by the length of any component connected in fluid communication with the hose 16 and in fluid communication between the manifolds 18, 20. Such components may include hose 16 fittings (such as ferrules and spool pieces) or an emergency release coupling bolted in between the presentation flanges and the hose 16. These components have the effect of reducing the distance between each presentation flange and the side of the corresponding vessels 12, 14, thus increasing the maximum operating distance between the vessels 12, 14 for a fixed length of hose 16.

Each maximum operating distance is further affected by the offset distance between the manifolds 18, 20, depending on whether the manifolds 18, 20 are aligned or offset during the transfer of matter between the vessels 12, 14.

The hose 16 may bend at the side of either vessel depending on the drafts of the vessels 12, 14, and is supported by an underlying saddle while being bent. More particularly, the hose 16 will bend downwards at the side of the higher vessel, while the hose 16 will bend upwards at or near the presentation flange of the manifold 18, 20 of the lower vessel. Such bending of the hose 16 will therefore change the maximum operating distance between the vessels 12, 14 for a fixed length of hose 16.

Thus, the above factors can be taken into account in order to obtain a more accurate maximum operating distance at each manifold height difference.

The manifold height difference at each combination of drafts varies with the list angles of the vessels 12, 14, due to the listing vessels not being perpendicular to the waterline. In order to determine the effect of the list angles, the dimensions of each vessel 12, 14 may be used to determine the changes in horizontal and vertical distances caused by the list angles. The vertical distance is then factored into the manifold height difference, while the horizontal distance is factored into the maximum operating distance between the vessels 12, 14.

The vessel assembly 10 may include a safety system with a plurality of safety functions for bringing the vessel assembly 10 to a safe state to ensure the safe operation of the hose 16 to transfer matter between the vessels 12, 14. Such safety functions may be associated with, for example, prevention of damage to the hose 16 and attached equipment, prevention of spillage of matter from the hose 16, and so on.

The vessel assembly 10 further includes an emergency release coupling. The emergency release coupling includes first and second coupling portions, with the first and second coupling portions connected in fluid communication with the hose 16 and in fluid communication between the manifolds 18, 20. The first and second coupling portions are configured to be selectively connectable and separable (e.g. through the use of break studs or mechanical actuators) to permit selective coupling and separation of the first and second manifolds 18, 20. Each coupling portion includes a respective valve that stays open when the coupling portions are connected together, and closes to block the flow of matter therethrough when the coupling portions are separated from each other.

The safety system is designed to selectively activate a first safety function and a second safety function associated with the emergency release coupling during the transfer of matter between the vessels 12, 14. The first safety function includes a first safety function including initiation of a first safe state to perform an emergency shut-down of the operation to transfer matter between the vessels 12, 14 via the flexible hose 16. The second safety function includes initiation of a second safe state to cause separation of the first and second coupling portions.

The first safety function involves the sending of an emergency shut-signal to the vessels 12, 14 to initiate the first safe state. The first safe state may include one or more of:
- shut-down of at least one pump configured to pump matter through the flexible hose 16;
- closure of at least one valve configured to control the flow of matter through the flexible hose 16, wherein the or each valve is located on either vessel 12, 14;
- de-energisation of the emergency release coupling and keep the first and second coupling portions connected to each other;
- de-energisation of a power source configured to enable charging of a stored energy source (such as an accumulator) for an actuator (such as a hydraulic actuator, a pneumatic actuator, or a combination thereof) operable to initiate the separation of the first and second coupling portions;
- de-energisation of a heating system (such as an oil circulation system) arranged to control the temperature of the emergency release coupling;
- de-energisation of one or more solenoid valves switchable to control the operation of the emergency release coupling;
- maintaining a stored energy source (such as an accumulator) in a fully charged state, wherein the stored energy source is for an actuator (such as a hydraulic actuator, a pneumatic actuator, or a combination thereof) operable to initiate the separation of the first and second coupling portions;
- maintaining closed an activation element (such as an activation valve), which is switchable to open to initiate the separation of the first and second coupling portions;
- maintaining open a blocking element (such as a blocking valve), which is switchable to close to configure the first and second coupling portions to block the flow of matter therethrough;
- initiation of a timer so as to automatically trigger the activation of the second safety function following expiry of the timer.

The safety system includes sensors, each of which is configured to sense an operating distance between the vessels 12, 14. Upon sensing that a certain operating distance between the vessels 12, 14 has been reached, each sensor sends a control signal to selectively activate the corresponding safety function to bring the vessel assembly 10 to a safe state. The selective activation of the first safety function is carried out at a first drift distance between the vessels 12, 14, and the selective activation of the second safety function is carried out at a second drift distance between the vessels 12, 14, the second drift distance being longer than the first drift distance. Both drift distances are kept within the working envelope in order to ensure that the first and second safety functions take place before the hose 16 becomes taut.

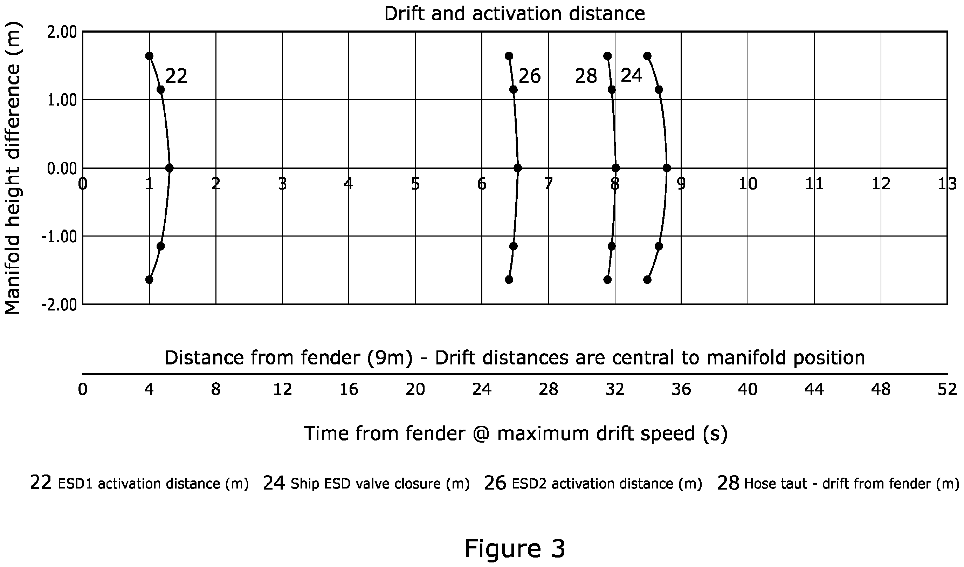

Figure 3 illustrates the activation points 22, 26 of the first and second safety functions within the working envelope with reference to the manifold height difference. It can be seen from Figure 3 that the activation points 22, 26 of the first and second safety functions occur before the hose 16 becomes taut 28, i.e. the activation points 22, 26 are kept well within the working envelope across a range of manifold height differences. Closure 24 of valves in each vessel 12, 14 take place beyond the drift distance at which the hose 16 becomes taut 28.

In this manner the working envelope is used as a basis to control the activation points of each safety function in order to ensure that each safety function takes place while the vessels 12, 14 are still within the confines of the working envelope.

## Claims

1. A method of arranging a vessel assembly (10) comprising first and second vessels (12,14) interconnected via a flexible conduit (16) for transferring matter between the first and second vessels (12,14), a first end of the conduit in fluid communication with a first manifold (18) of the first vessel (12), a second end of the conduit in fluid communication with a second manifold (20) of the second vessel (14), the method comprising the steps of:
for each of a plurality of combinations of drafts of the vessels (12,14), calculating a respective manifold height difference between the respective heights of the first and second manifolds (18,20) above a waterline;
calculating a plurality of maximum operating distances between the vessels (12,14), wherein each of the plurality of calculated maximum operating distances respectively corresponds to a respective one of the plurality of calculated manifold height differences, wherein each calculated maximum operating distance between the vessels (12,14) corresponds to the maximum distance to which the vessels (12,14) can drift apart before the conduit becomes taut (28) at the respective manifold height difference; and
arranging the vessels (12,14) within a working envelope that corresponds to the plurality of calculated maximum operating distances between the vessels (12,14).

2. A method according to Claim 1 wherein the working envelope corresponds to the lower or lowest of the calculated maximum operating distances.

3. A method according to any one of the preceding claims wherein the plurality of combinations of drafts of the vessels (12,14) includes:
• a first combination of drafts consisting of a minimum draft of the first vessel (12) and a maximum draft of the second vessel (14);
• a second combination of drafts consisting of a maximum draft of the first vessel (12) and a minimum draft of the second vessel (14);
• a third combination of drafts consisting of a minimum draft of the first vessel (12) and a minimum draft of the second vessel (14); and/or
• a fourth combination of drafts consisting of a maximum draft of the first vessel (12) and a maximum draft of the second vessel (14),
preferably wherein the maximum draft of each vessel (12,14) corresponds to the vessel (12,14) being in a loaded state, and a minimum draft of each vessel (12,14) corresponds to the vessel (12,14) being in a ballast state.

4. A method according to any one of the preceding claims wherein the plurality of combinations of drafts includes a fifth combination of drafts for which the manifold height difference is equal to zero.

5. A method according to any one of the preceding claims wherein each calculated maximum operating distance between the vessels (12,14) is a function of one or more of:
• a length of the flexible conduit (16);
• the respective manifold height difference;
• a depth of the first manifold (18) from the side of the first vessel (12);
• a depth of the second manifold (20) from the side of the second vessel (14);
• a length of at least one component connected in fluid communication with the conduit and in fluid communication between the manifolds (18,20);
• a list angle of the first vessel (12);
• a list angle of the second vessel (14).

6. A method according to any one of the preceding claims, wherein the vessel assembly (10) includes a safety system, the method including the step of selectively activating at least one safety function of the safety system to bring the vessel assembly (10) to a safe state, wherein the selective activation of the or each safety function is carried out when the vessels (12,14) are within the working envelope.

7. A method according to Claim 6 wherein the vessel assembly (10) further includes: an emergency release coupling, the emergency release coupling including first and second coupling portions, the first and second coupling portions connected in fluid communication with the conduit and in fluid communication between the manifolds (18,20), the first and second coupling portions configured to be selectively connectable and separable to permit selective coupling and separation of the first and second manifolds (18,20), and
wherein the at least one safety function includes: a first safety function including initiation of a first safe state to perform an emergency shut-down of an operation to transfer matter between the vessels (12,14) via the flexible conduit (16); and/or a second safety function including initiation of a second safe state to cause separation of the first and second coupling portions,
preferably wherein the selective activation of the first safety function is carried out at a first drift distance (22) between the vessels (12,14), and the selective activation of the second safety function is carried out at a second drift distance (26) between the vessels (12,14), the second drift distance (26) being longer than the first drift distance (22)..

8. A method according to Claim 7 wherein the first safe state includes one or more of:
• shut-down of at least one pump configured to pump matter through the flexible conduit;
• closure of at least one valve configured to control the flow of matter through the flexible conduit, wherein the or each valve is located on either vessel;
• de-energisation of the emergency release coupling and keep the first and second coupling portions connected to each other;
• de-energisation of a power source configured to enable charging of a stored energy source for an actuator operable to initiate the separation of the first and second coupling portions;
• de-energisation of a heating system arranged to control the temperature of the emergency release coupling;
• de-energisation of one or more solenoid valves switchable to control the operation of the emergency release coupling;
• maintaining a stored energy source in a fully charged state, wherein the stored energy source is for an actuator operable to initiate the separation of the first and second coupling portions;
• maintaining closed an activation element, which is switchable to open to initiate the separation of the first and second coupling portions;
• maintaining open a blocking element, which is switchable to close to configure the first and second coupling portions to block the flow of matter therethrough;
• initiation of a timer so as to automatically trigger the activation of the second safety function following expiry of the timer.

## Patentansprüche

1. Ein Verfahren zum Anordnen einer Gefäßanordnung (10), die ein erstes und ein zweites Gefäß (12, 14) umfasst, die über eine flexible Leitung (16) zum Übertragen von Stoffen zwischen dem ersten und dem zweiten Gefäß (12, 14) miteinander verbunden sind, wobei ein erstes Ende der Leitung in Fluidverbindung mit einem ersten Verteiler (18) des ersten Gefäßes (12) und ein zweites Ende der Leitung in Fluidverbindung mit einem zweiten Verteiler (20) des zweiten Gefäßes (14) steht, wobei das Verfahren die folgenden Schritte umfasst:
Berechnen für jede einer Vielzahl von Tiefgangkombinationen der Gefäße (12, 14) eine jeweilige Verteilerhöhendifferenz zwischen den jeweiligen Höhen der ersten und zweiten Verteiler (18, 20) über einer Wasserlinie;
Berechnen einer Vielzahl von maximalen Betriebsentfernungen zwischen den Gefäßen (12, 14), wobei jede der Vielzahl von berechneten maximalen Betriebsentfernungen jeweils einer entsprechenden Differenz der Vielzahl von berechneten Verteilerhöhendifferenzen entspricht, wobei jede berechnete maximale Betriebsentfernung zwischen den Gefäßen (12, 14) der maximalen Entfernung entspricht, bis zu der die Gefäße (12, 14) auseinanderdriften können, bevor die Leitung bei der jeweiligen Verteilerhöhendifferenz straff wird (28); und
Anordnen der Gefäße (12, 14) innerhalb eines Arbeitsbereiches, der der Vielzahl der berechneten maximalen Betriebsentfernungen zwischen den Gefäßen (12, 14) entspricht.

2. Ein Verfahren nach Anspruch 1, wobei der Arbeitsbereich der unteren oder niedrigsten der berechneten maximalen Betriebsentfernungen entspricht.

3. Ein Verfahren nach einem der vorhergehenden Ansprüche, wobei die Vielzahl von Tiefgangkombinationen der Gefäße (12, 14) Folgendes umfasst:
• eine erste Kombination von Tiefgängen, bestehend aus einem minimalen Tiefgang des ersten Gefäßes (12) und einem maximalen Tiefgang des zweiten Gefäßes (14);
• eine zweite Kombination von Tiefgängen, die aus einem maximalen Tiefgang des ersten Gefäßes (12) und einem minimalen Tiefgang des zweiten Gefäßes (14) besteht;
• eine dritte Kombination von Tiefgängen, bestehend aus einem minimalen Tiefgang des ersten Gefäßes (12) und einem minimalen Tiefgang des zweiten Gefäßes (14); und/oder
• eine vierte Kombination von Tiefgängen, bestehend aus einem maximalen Tiefgang des ersten Gefäßes (12) und einem maximalen Tiefgang des zweiten Gefäßes (14), wobei der maximale Tiefgang eines jeden Gefäßes (12, 14) vorzugsweise einem beladenen Zustand des Gefäßes (12, 14) entspricht und ein minimaler Tiefgang eines jeden Gefäßes (12, 14) einem Ballastzustand des Gefäßes (12, 14) entspricht.

4. Ein Verfahren nach einem der vorhergehenden Ansprüche, wobei die Vielzahl der Kombinationen von Tiefgängen eine fünfte Kombination von Tiefgängen einschließt, für die die Verteilerhöhendifferenz gleich Null ist.

5. Ein Verfahren nach einem der vorhergehenden Ansprüche, wobei jede berechnete maximale Betriebsentfernung zwischen den Gefäßen (12, 14) eine Funktion von einem oder mehreren der folgenden Punkte ist:
• einer Länge der flexiblen Leitung (16);
• der jeweiligen Verteilerhöhendifferenz;
• einer Tiefe des ersten Verteilers (18) von der Seite des ersten Gefäßes (12);
• eine Tiefe des zweiten Verteilers (20) von der Seite des zweiten Gefäßes (14);
• eine Länge von mindestens einer Komponente, die in Fluidverbindung mit der Leitung und in Fluidverbindung zwischen den Verteilern (18, 20) steht;
• einen Neigungswinkel des ersten Gefäßes (12);
• einen Neigungswinkel des zweiten Gefäßes (14).

6. Ein Verfahren nach einem der vorhergehenden Ansprüche, wobei die Gefäßanordnung (10) ein Sicherheitssystem umfasst, wobei das Verfahren den Schritt des selektiven Aktivierens mindestens einer Sicherheitsfunktion des Sicherheitssystems umfasst, um die Gefäßanordnung (10) in einen sicheren Zustand zu bringen, wobei die selektive Aktivierung der oder jeder Sicherheitsfunktion durchgeführt wird, wenn sich die Gefäße (12, 14) innerhalb des Arbeitsbereichs befinden.

7. Ein Verfahren nach Anspruch 6, wobei die Gefäßanordnung (10) ferner Folgendes umfasst: eine Notabschaltkupplung, wobei die Notabschaltkupplung einen ersten und einen zweiten Kupplungsabschnitt umfasst, wobei der erste und der zweite Kupplungsabschnitt in Fluidverbindung mit der Leitung und in Fluidverbindung zwischen den Verteilern (18, 20) verbunden sind, wobei der erste und der zweite Kupplungsabschnitt so konfiguriert sind, dass sie selektiv verbindbar und trennbar sind, um eine selektive Verbindung und Trennung des ersten und des zweiten Verteilers (18, 20) zu ermöglichen, und
wobei die mindestens eine Sicherheitsfunktion Folgendes umfasst: eine erste Sicherheitsfunktion, die die Einleitung eines ersten sicheren Zustands einschließt, um eine Notabschaltung eines Vorgangs zur Übertragung von Stoffen zwischen den Gefäßen (12, 14) über die flexible Leitung (16) durchzuführen; und/oder eine zweite Sicherheitsfunktion, die die Einleitung eines zweiten sicheren Zustands einschließt, um die Trennung des ersten und des zweiten Kopplungsabschnitts zu bewirken,
wobei die selektive Aktivierung der ersten Sicherheitsfunktion vorzugsweise bei einer ersten Driftdistanz (22) zwischen den Gefäßen (12, 14) erfolgt und die selektive Aktivierung der
zweiten Sicherheitsfunktion bei einer zweiten Driftdistanz (26) zwischen den Gefäßen (12, 14) erfolgt, wobei die zweite Driftdistanz (26) länger als die erste Driftdistanz (22) ist.

8. Ein Verfahren nach Anspruch 7, wobei der erste sichere Zustand ein oder mehrere der folgenden Punkte umfasst:
• Abschalten von mindestens einer Pumpe, die so konfiguriert ist, dass sie Stoffe durch die flexible Leitung pumpt;
• Schließen mindestens eines Ventils, das so konfiguriert ist, dass es den Stoffstrom durch die flexible Leitung steuert, wobei das oder jedes Ventil an einem der beiden Gefäße angeordnet ist;
• Abschalten der Notabschaltkupplung und Verbinden des ersten und zweiten Kupplungsabschnitts miteinander;
• Abschalten einer Energiequelle, die so konfiguriert ist, dass sie das Aufladen einer gespeicherten Energiequelle für einen Aktuator ermöglicht, der die Trennung des ersten und zweiten Kupplungsabschnitts einleiten kann;
• Abschalten eines Heizungssystems, das dazu dient, die Temperatur der Notabschaltkupplung zu steuern;
• Abschalten eines oder mehrerer Magnetventile, die so geschaltet werden können, dass sie den Betrieb der Notabschaltkupplung steuern;
• Halten einer gespeicherten Energiequelle in einem vollständig geladenen Zustand, wobei die gespeicherte Energiequelle für einen Aktuator bestimmt ist, der die Trennung des ersten und zweiten Kupplungsabschnitts einleiten kann;
• das Geschlossenhalten eines Aktivierungselements, das schaltbar ist, um die Trennung des ersten und zweiten Kupplungsabschnitts einzuleiten;
• Offenhalten eines Sperrelements, das so geschaltet werden kann, dass es sich schließt, um den ersten und den zweiten Kupplungsabschnitt so zu konfigurieren, dass der Stofffluss durch sie hindurch blockiert wird;
• Auslösen eines Zeitgebers, um die Aktivierung der zweiten Sicherheitsfunktion nach Ablauf des Zeitgebers automatisch auszulösen.

## Revendications

1. Procédé d'agencement d'un ensemble navire (10) comprenant un premier et un second navire (12, 14) interconnectés via un conduit flexible (16) pour transférer de la matière entre le premier et le second navire (12, 14), une première extrémité du conduit en communication fluidique avec un premier collecteur (18) du premier navire (12), une seconde extrémité du conduit en communication fluidique avec un second collecteur (20) du second navire (14), le procédé comprenant les étapes suivantes :
pour chacune d'une pluralité de combinaisons de tirants d'eau des navires (12, 14), le calcul d'une différence de hauteur de collecteur respective entre les hauteurs respectives des premier et second collecteurs (18, 20) au-dessus d'une ligne de flottaison ;
le calcul d'une pluralité de distances de fonctionnement maximales entre les navires (12, 14), dans lequel chacune de la pluralité de distances de fonctionnement maximales calculées correspond respectivement à une différence respective de la pluralité de différences de hauteur de collecteur calculées, dans lequel chaque distance de fonctionnement maximale calculée entre les navires (12, 14) correspond à la distance maximale à laquelle les navires (12, 14) peuvent s'éloigner les uns des autres avant que le conduit ne se tende (28) à la différence de hauteur de collecteur respective ; et
la disposition des navires (12, 14) à l'intérieur d'une enveloppe de travail qui correspond à la pluralité de distances de fonctionnement maximales calculées entre les navires (12, 14).

2. Procédé selon la revendication 1, dans lequel l'enveloppe de travail correspond à une distance plus basse ou à la plus basse des distances de fonctionnement maximales calculées.

3. Procédé selon l'une quelconque des revendications précédentes, dans lequel la pluralité de combinaisons de tirants d'eau des navires (12, 14) comporte :
• une première combinaison de tirants d'eau constituée d'un tirant d'eau minimum du premier navire (12) et d'un tirant d'eau maximum du second navire (14) ;
• une deuxième combinaison de tirants d'eau constituée d'un tirant d'eau maximum du premier navire (12) et d'un tirant d'eau minimum du second navire (14) ;
• une troisième combinaison de tirants d'eau constituée d'un tirant d'eau minimum du premier navire (12) et d'un tirant d'eau minimum du second navire (14) ; et/ou
• une quatrième combinaison de tirants d'eau constituée d'un tirant d'eau maximum du premier navire (12) et d'un tirant d'eau maximum du second navire (14),
de préférence, dans lequel le tirant d'eau maximum de chaque navire (12, 14) correspond au navire (12, 14) étant dans un état chargé, et un tirant d'eau minimum de chaque navire (12, 14) correspond au navire (12, 14) étant dans un état de ballast.

4. Procédé selon l'une quelconque des revendications précédentes, dans lequel la pluralité de combinaisons de tirant d'eau comporte une cinquième combinaison de tirant d'eau pour laquelle la différence de hauteur du collecteur est égale à zéro.

5. Procédé selon l'une quelconque des revendications précédentes, dans lequel chaque distance de fonctionnement maximale calculée entre les navires (12, 14) est une fonction d'un ou de plusieurs parmi :
• une longueur du conduit flexible (16) ;
• la différence de hauteur des collecteurs respectifs ;
• une profondeur du premier collecteur (18) depuis le côté du premier navire (12) ;
• une profondeur du second collecteur (20) depuis le côté du second navire (14) ;
• une longueur d'au moins un composant connecté en communication fluidique avec le conduit et en communication fluidique entre les collecteurs (18, 20) ;
• un angle de gîte du premier navire (12) ;
• un angle de gîte du second navire (14).

6. Procédé selon l'une quelconque des revendications précédentes, dans lequel l'ensemble navire (10) comporte un système de sécurité, le procédé comportant l'étape d'activation sélective d'au moins une fonction de sécurité du système de sécurité pour amener l'ensemble navire (10) à un état sûr, dans lequel l'activation sélective de la ou de chaque fonction de sécurité est effectuée lorsque les navires (12, 14) se trouvent à l'intérieur de l'enveloppe de travail.

7. Procédé selon la revendication 6, dans lequel l'ensemble navire (10) comporte en outre : un raccord à libération d'urgence, le raccord à libération d'urgence comportant des première et seconde parties de couplage, les première et seconde parties de couplage étant connectées en communication fluidique avec le conduit et en communication fluidique entre les collecteurs (18, 20), les première et seconde parties de couplage étant configurées pour être sélectivement connectables et séparables afin de permettre un couplage et une séparation sélectifs des premier et second collecteurs (18, 20), et
dans lequel l'au moins une fonction de sécurité comporte : une première fonction de sécurité comportant le lancement d'un premier état de sécurité pour effectuer un arrêt d'urgence d'une opération de transfert de matière entre les navires (12, 14) via le conduit flexible (16) ; et/ou une seconde fonction de sécurité comportant l'initiation d'un second état de sécurité pour provoquer la séparation des première et seconde parties de couplage,
de préférence, dans lequel l'activation sélective de la première fonction de sécurité est réalisée à une première distance de dérive (22) entre les navires (12, 14), et l'activation sélective de la seconde fonction de sécurité est réalisée à une seconde distance de dérive (26) entre les navires (12, 14), la seconde distance de dérive (26) étant plus longue que la première distance de dérive (22).

8. Procédé selon la revendication 7, dans lequel le premier état de sécurité comporte un ou plusieurs parmi :
• un arrêt d'au moins une pompe configurée pour pomper des matières à travers le conduit flexible ;
• une fermeture d'au moins une vanne configurée pour contrôler l'écoulement des matières à travers le conduit flexible, dans lequel la ou chaque vanne est située sur l'un ou l'autre navire ;
• une mise hors tension du couplage à libération d'urgence et maintien des première et seconde parties de couplage connectées l'une à l'autre ;
• une mise hors tension d'une source d'énergie configurée pour permettre la charge d'une source d'énergie stockée pour un actionneur pouvant fonctionner pour initier la séparation des première et seconde parties de couplage ;
• une mise hors tension d'un système de chauffage prévu pour contrôler la température du raccord à libération d'urgence ;
• une mise hors tension d'une ou de plusieurs électrovannes commutables pour contrôler le fonctionnement du raccord à libération d'urgence ;
• un maintien d'une source d'énergie stockée dans un état complètement chargé, dans lequel la source d'énergie stockée est destinée à un actionneur pouvant être actionné pour initier la séparation des première et seconde parties de couplage ;
• un maintien dans l'état fermé d'un élément d'activation, qui peut être commuté pour s'ouvrir pour initier la séparation des première et seconde parties de couplage ;
• un maintien dans l'état ouvert d'un élément de blocage, qui peut être commuté en position fermée pour configurer les première et seconde parties de couplage afin de bloquer l'écoulement de matière à travers celles-ci ;
• un déclenchement d'un temporisateur afin de déclencher automatiquement l'activation de la seconde fonction de sécurité après l'expiration du temporisateur.
